# EUROPÄISCHE PATENTSCHRIFT

(11) **EP 1 797 450 B1**
(45) Veröffentlichungstag und Bekanntmachung des Hinweises auf die Patenterteilung: **12.09.2012**
(21) Anmeldenummer: 05762974.3
(22) Anmeldetag: 07.07.2005
(51) Int. Cl.: G01S 13/93, G01S 7/41, G01S 13/58

(54) **RADARSENSOR UND VERFAHREN ZUR ABSTANDS- UND GESCHWINDIGKEITSREGELUNG**
RADAR SENSOR AND METHOD FOR REGULATING THE DISTANCE AND SPEED
CAPTEUR RADAR ET PROCEDE DE REGULATION DE L'ESPACEMENT ET DE LA VITESSE

(30) Priorität: 28.09.2004 DE 102004046873
(43) Veröffentlichungstag der Anmeldung: 20.06.2007
(73) Patentinhaber: ROBERT BOSCH GMBH, 70442 Stuttgart (DE)
(72) Erfinder: JORDAN, Ruediger, 70435 Stuttgart (DE)
(86) Internationale Anmeldenummer: PCT/EP2005/053244
(87) Internationale Veröffentlichungsnummer: WO 2006/034886

(56) Entgegenhaltungen:
- EP-A- 1 094 336
- EP-A- 1 369 705
- EP-A- 1 431 776
- EP-A- 1 557 693
- EP-A- 1 557 694
- WO-A-99/27384
- WO-A-99/36796
- WO-A-03/019234
- US-A1- 2003 174 054

## Beschreibung

Die vorliegende Erfindung betrifft einen Radarsensor und ein zugehöriges Verfahren zur Abstands- und Geschwindigkeitsregelung eines Kraftfahrzeugs, mittels denen Objekte in Fahrtrichtung vor dem Fahrzeug detektiert und mindestens die Größen Abstand, Relativgeschwindigkeit und Azimut-Winkel der erkannten Objekte bezüglich des Fahrzeugs ermittelt werden, wobei die zeitliche Veränderung des Reflexionspunkts der Radarstrahlung auf dem Objekt ermittelt wird und eine Klassifikation des detektierten Objekts in Abhängigkeit der zeitlichen Veränderung des Reflexionspunkts ermittelt werden.

### Stand der Technik

Aus der Veröffentlichung "adaptive Fahrgeschwindigkeitsregelung ACC", herausgegeben von der Robert Bosch GmbH, April 2002 (ISBN-3-7782-2034-9) ist ein Radarsensor zur adaptiven Abstands- und Geschwindigkeitsregelung bekannt, der Radarstrahlung aussendet und an Objekten innerhalb des Sensorerfassungsbereichs reflektierte Teilstrahlen wieder empfängt und in Abhängigkeit der gemessenen Relativgeschwindigkeit und das Abstands vorherbefindlicher Objekte eine Geschwindigkeitsregelung im Sinne einer Abstandskonstantregelung durchführt und bei Nichtvorhandensein vorausbefindlicher Objekte eine Geschwindigkeitsregelung im Sinne einer Geschwindigkeitskonstantregelung durchführt.

Nachteilig bei Radarsensoren zur Abstands- und Geschwindigkeitsregelung ist es, dass die Reflexionspunkte der detektierten Objekte, an denen die ausgesandte Rahrstrahlung zurückreflektiert wird je nach Betrachtungswinkel veränderlich sind und somit die Reflexionspunkte der vorausbefindlichen Objekte ständig auf dem Objekt wandern können. Hieraus ergibt sich eine Messungenauigkeit, die den Messgrößen Abstand d, Azimutwinkel phi des Objekts bezüglich der Sensorhauptachse sowie der Relativgeschwindigkeit vᵣₑₗ als Messfehler überlagert sind, die sich in einem statistischen Rauschen dieser Messgrößen äußern.

Aus der WO 99/27384 ist ein Verfahren und eine Vorrichtung zur Objektklassifikation bekannt, bei dem die Objekte mittels einer an einem Fahrzeug angebrachten Radareinrichtung erfasst werden, die an der Vorderseite des Fahrzeugs angeordnet ist, um ein Radar-Mikrowellensignal zu senden und Reflexe desselben von Objekten zu empfangen, die sich vor dem Fahrzeug befinden. Dabei wird die Amplitude des Radar-Reflexes oder des Echos von dem Objekt, wenn sich das Fahrzeug einem Objekt von vorne nähert, unterschiedliche Eigenschaften zeigen, je nachdem ob das Objekt ein am Boden befindliches Objekt oder ein oben befindliches Objekt ist oder nicht. Die Erfassung dieses unterschiedlichen Verhaltens kann somit verwendet werden, um entsprechend das Objekt als eine Gefahr oder keine Gefahr zu klassifizieren.

Aus der WO 99/36796 ist eine oberhalb einer reflektierenden Fläche angeordnete Radaranordnung bekannt, die zur Schätzung der Höhe eines Objekts über der Fläche verwendet wird sowie ein Verfahren bekannt, welches ohne eine verfeinerte Winkelauflösung der Radarantenne auskommt und allein auf der Verarbeitung der Signale basiert. Dieses Verfahren macht sich das üblicherweise als nachteilig empfundene Entstehen eines Interferenzmusters des Strahlungsfeldes der Radarantenne zunutze, indem die Intensitätsmodulation eines Empfangssignals, welches von einem in dem Überwachungsbereich radial zur Radaranordnung bewegten Objekts herrührt, ausgewertet und in Verbindung mit der gemessenen Objektentfemung zur Schätzung eines Wertes für die Höhe des Objektes über der Fahrbahn herangezogen wird.

Aus der US 2003/0174054 ist ein Verfahren und eine Vorrichtung zur Erkennung der Objektart eines reflektierenden Objekts auf der Fahrbahn bekannt, bei dem eine Vielzahl an Reflektionspunkten mittels einer Radareinrichtung ermittelt werden. Diese Vielzahl an Reflektionspunkten werden nach einem vorgegebenen Verfahren grup-piert und die gruppierten Punkte als Objekt betrachtet. Die Relativgeschwindigkeit der Reflektionspunkte werden bei der Gruppierung berücksichtigt und hieraus auf die Art des Objekts geschlossen.

Aus der WO 03/019234 ist Verfahren zur Erkennung und Verfolgung von Objekten auf der Basis von wenigstens einem Sensor zur Erfassung elektromagnetischer Strahlung, insbesondere einem Laserscanner, bekannt, der erfaßte, tiefenaufgelöste, Bildpunkte enthaltende Bilder von Gegenständen in einem Sichtbereich des Sensors liefert, bei dem die Erkennung und Verfolgung unter Verwendung von den Objekten zugeordneten Modellen für die zeitliche Entwicklung von dynamischen Zustandsvariablen erfolgt, die jeweils einen zeitlich veränderlichen Zustand des Objekts beschreiben und dynamische Zustandsvariablen zur Bestimmung der Position des jeweiligen Objekts umfassen, und bei dem bei der Erkennung von Objekten eine Zuordnung von Bildpunkten eines aktuellen Bildes zu wenigstens einem Objekt erfolgt und wenigstens einem Objekt als statische Eigenschaft eine Objektbox zugeordnet, die eine Ausdehnung des Objekts in der Bildebene darstellt, eine bestimmte Form und Größe aufweist und hinsichtlich Form und Größe dem durch das Objekt dargestellten Gegenstand entspricht.

Aus der EP 1 557 694 A1 ist ein Verfahren zur Klassifizierung von Objekten, die Gegenstände im Erfassungsbereich eines Sensors für elektromagnetische Strahlung, insbesondere eines Laserscanners, entsprechen, bekannt, wobei auf der Basis wenigstens eines von dem Sensor erfassten Abstandsbildes des Erfassungsbereichs mit Abstandsbildpunkten, die jeweils durch Aussendung eines Pulses elektromagnetischer Strahlung und Detektion des von einem Punkt oder Bereich auf einem Gegenstand jeweils als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, werden wenigstens einem Objekt Abstandsbildpunkte des Abstandsbildes zugeordnet, und es wird dem Objekt in Abhängigkeit von wenigstens einem der Parameterwerte für die Echopulseigenschaft, die den dem Objekt zugeordneten Abstandsbildpunkten zugeordnet sind, eine Objektklasse zugeordnet

Aus der EP 1 557 693 A1 ist ein Verfahren zur Verfolgung von Objekten, die Gegenständen im Erfassungsbereich eines Sensors für elektromagnetische Strahlung, insbesondere eines Laserscanners, entsprechen, bekannt, wobei auf der Basis von in zeitlicher Folge von dem Sensor erfassten Abstandsbildem des Erfassungsbereichs mit Abstandsbildpunkten, die jeweils durch Aussendung eines Pulses elektromagnetischer Strahlung und Detektion des von einem Punkt oder Bereich auf einen Gegenstand jeweils als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, wird in aufeinander folgenden Zyklen jeweils in einem aktuellen Zyklus in einem aktuellen Abstandsbild nach Abstandsbildpunkten gesucht, die einem aus einem vorhergehenden Zyklus bekannten Objekt entsprechen, und es wird aus dem Objekt zugeordneten Abstandsbildpunkten des aktuellen Abstandsbildes eine aktuelle Lage des Objekts ermittelt, wobei den Abstandsbildpunkten jeweils zugeordnete Parameterwerte der Echopulseigenschaft verwendet werden.

### Kern und Vorteile der Erfindung

Der Kern der vorliegenden Erfindung ist es, eine Vorrichtung und ein Verfahren anzugeben, mittels denen die Nachteile des Standes der Technik überwunden werden, indem der Messfehler für Abstand d, Relativgeschwindigkeit vᵣₑₗ und Azimutwinkel phi ermittelt werden können, damit ein präziseres Objekt-Tracking durchführbar ist und anhand der Größe und zeitlichen Änderung der Reflexionswanderungen bzw. der Anzahl an Reflexionspunkten pro detektiertem Objekt, eine Objektklassifikation durchgeführt werden kann, wobei diese Objektklassifikation vorteilhafterweise auch wieder zur genaueren Objektpositionsvorhersage genutzt werden kann. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise wird die räumliche Ausdehnung der Veränderung des Reflexionspunkts über einen vorbestimmten Zeitraum erfasst. Hierdurch ist es möglich, durch Objektwanderungen, die zeitlich veränderlich sind, auf die Größe des Objektes schließen zu können, und hiermit eine Objektklassifikation durchführen zu können, bei der die erkannten Objekte hinsichtlich ihrer Größe klassifiziert werden.

Weiterhin ist es vorteilhaft, dass die räumliche Ausdehnung anhand zeitlicher Veränderungen des ermittelten Azimutwinkels des Reflexionspunktes ermittelt wird. Weiterhin ist es vorteilhaft, dass zusätzlich die Anzahl der Reflexionspunkte auf dem Objekt zur Klassifikation des Objekts ausgewertet werden. So weisen Objekte in Form von Lastkraftwagen meistens eine größere Anzahl an Reflexionspunkten auf, da diese eine größere Reflexionsfläche besitzen und meistens auch stärker zerklüftet sind als Personenkraftwagen, sodass mehr Reflexionspunkte entstehen können, als bei Personenkraftwagen.

Weiterhin ist es vorteilhaft, dass die momentane Aufenthaltsposition des erkannten Objekts aus einer zuvor ermittelten Objektposition und einer zuvor ermittelten Relativgeschwindigkeit des Objekts vorausberechnet wird und die räumliche Veränderung des Reflexionspunkts aus der Abweichung der momentanen und der vorausberechneten Objekt-position ermittelt wird. Tritt während der zuvor ermittelten Objektreflexion und der momentanen Objektreflexion eine Reflexwanderung auf, d.h. verändert sich der Reflexionspunkt auf dem Objekt, so entsteht zusätzlich zur veränderlichen Objektposition eine Bewegung, die infolge der Reflexwanderung messbar ist. Durch die Ermittlung der Abweichung zwischen dieser vorausberechneten Objektposition und der ermittelten Reflexionsposition kann man die räumliche Ausdehnung der Reflexwanderung ermitteln, sofern beide Reflexionspunkte zum gleichen Objekt gehören. Da sich bei einer Reflexionswanderung die gemessene Relativgeschwindigkeit kaum verändert und der Reflexionspunkt nur innerhalb eines gewissen Bereichs auf der Objektfläche springen kann, können Pbjektwanderungen und mehrere Objektreflexionen diesem einen Objekt zugeordnet werden und durch Auswertung der Reflexionswanderungen auf die Größe des vorherfahrenden, detektierten Objekts geschlossen werden.

Weiterhin ist es vorteilhaft, dass die Objekte im Rahmen der Objektklassifikation zu einer der Objektklassen Personenkraftwagen, Lastkraftwagen, Zweirad, Kanaldeckel oder sonstige Objekte zugeordnet werden. Aus der Ermittlung der Objektausdehnung ist es möglich, die erkannten Objekte einer der genannten Objektklassen zuzuordnen, wodurch auch die Vorausberechnung zukünftiger Objektpositionen mit einer höheren Genauigkeit erfolgen kann, da beispielsweise Objekte der Objektklasse Zweirad größere Quergeschwindigkeiten haben können als Objekte, die beispielsweise der Objektklasse Lastkraftwagen zugeordnet wurden.

Weiterhin ist es vorteilhaft, dass Objekte, die bereits einer Objektklasse zugeordnet wurden, in einem nachfolgenden Messzyklus einer anderen Objektklasse zugeordnet werden können, da beispielsweise eine gemessene Reflexwanderung auf dem Objekt auf eine Objektreflexionsfläche schließen lassen, die größer ist, als dies nach der bislang eingeordneten Objektklasse möglich wäre. So ist es sinnvoll, Objekte die als Zweirad klassifiziert waren in die Objektklasse Personenkraftwagen zu übernehmen oder Objekte die als Personenkraftwagen klassifiziert waren in die Objektklasse Lastkraftwagen zu übernehmen. Eine entgegengesetzte Veränderung der Objektklasse, bei der die Objektklasse dahingehend geändert wird, dass diese Objekte mit kleineren Reflexionsflächen charakterisiert, beziehungsweise die Änderung der Objektklasse von Lkw zu Pkw oder von Pkw zu Zweirad ist hierbei nicht sinnvoll, da bei Objekten einer Objektklasse, für die bereits eine große Reflexionsfläche ermittelt wurde wie beispielsweise bei Lastkraftwagen, zu einem späteren Messzeitpunkt nicht zwingend eine große Reflexwanderung zur Folge haben müssen.

Weiterhin ist es vorteilhaft, dass die Abweichung der momentanen und der vorausberechneten Objektposition kalmangefiltert wird.

Weiterhin ist es vorteilhaft, dass die kalmangefilterte Abweichung und/oder die ermittelte Objektklasse zur genaueren Vorausberechnung der zukünftigen Aufenthaltsposition des erkannten Objekts aus der momentan ermittelten Objektposition und der momentan ermittelten Relativgeschwindigkeit des Objekts herangezogen wird.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung des Programm geeignet ist. Als Steuerelement kann insbesondere ein elektrisches Speichermedium zur Anwendung kommen, bspw. ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßein Vorrichtung,
- Figur 2: ein Abstand-Zeit-Diagramm zur Erläuterung des erfindungsgemäßen Verfahrens und
- Figur 3: ein Ablaufdiagramm einer Ausführungsform des erfindungsgemäßen Verfahrens.

### Beschreibung von Ausführungsbeispielen

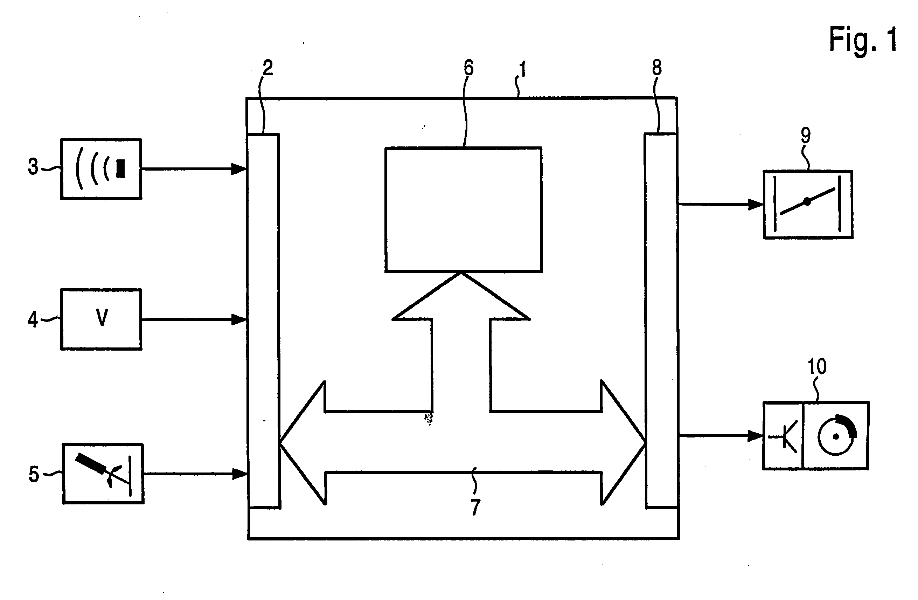

In Figur 1 ist eine Abstands- und Geschwindigkeitsregeleinrichtung 1 dargestellt, die unter anderem eine Eingangsschaltung 2 aufweist. Mittels der Eingangsschaltung 2 sind dem Abstands- und Geschwindigkeitsregler 1 Eingangssignale zuführbar. Als Eingangssignale sind unter anderem Messgrößen einer Objektsensorik 3 vorgesehen, die beispielsweise als Radarsensor oder als Lasersensor ausgeführt sein kann. Diese Objektsensorik 3 sendet elektromagnetische Wellen aus, die an vorausbefindlichen Objekten vor dem eigenen Fahrzeug reflektiert werden und deren reflektierte Teilstrahlungen von der Objektsensorik 3 wieder empfangen werden, wobei anhand der Signallaufzeit der elektromagnetischen Wellen sowie der Dopplerverschiebung der Sendesignale der Abstand d zwischen dem eigenen Fahrzeug und dem vorausbefindlichen Objekt, die Relativgeschwindigkeit vᵣₑₗ des vorausbefindlichen Objekts bezüglich des eigenen Fahrzeugs sowie der Azimutwinkel phi des vorausbefindlichen Objekts bezüglich der Sensorhauptachse ermittelt werden. Diese Messgrößen werden bezüglich eines jeden Reflexionspunkts an Objekten innerhalb des Sensorerfassungsbereichs der Eingangsschaltung 2 zugeführt. Hierbei ist es möglich, dass pro detektiertem Objekt nur ein oder auch mehrere Reflexionspunkte gemessen werden. Die Zugehörigkeit mehrerer Reflexionspunkte zu einem einzigen Objekt kann anhand der in etwa gleichen Relativgeschwindigkeit vᵣₑₗ für die verschiedenen Reflexionspunkte erkannt werden sowie anhand der in etwa gleichen Azimutwinkel phi und Abstände d. Weiterhin wird der Eingangsschaltung 2 ein Geschwindigkeitssignal v eines Geschwindigkeitssensors 4 zugeführt, das die Geschwindigkeit des eigenen Fahrzeugs repräsentiert. Hierdurch ist es möglich, die Relativgeschwindigkeit, die die Objektsensorik 3 misst und zur Verfügung stellt, in Absolutwerte umzurechnen. Weiterhin sind der Eingangsschaltung 2 Signale einer Bedieneinrichtung 5 zuführbar, mittels der der Fahrer des Fahrzeugs den Abstands- und Geschwindigkeitsregler ein- und ausschalten kann, sowie fahrerspezifische Systemeinstellungen verändern kann, um den Abstands- und Geschwindigkeitsregler 1 nach seinen Wünschen einzustellen. Die der Eingangsschaltung 2 der Abstands- und Geschwindigkeitsregeleinrichtung 1 zugeführten Eingangssignale werden mittels einer Datenaustauscheinrichtung 7 an eine Berechnungseinrichtung 6 weitergeleitet. Die Berechnungseinrichtung 6, die beispielsweise als Mikroprozessor oder Signalprozessor ausgeführt sein kann, ermittelt aus den ihr zugeführten Eingangssignalen Ausgangssignale, die an nachgeordnete Stellelemente ausgebbar sind. Dabei ist das erfindungsgemäße Verfahren beispielsweise als Programmcode in der Berechnungseinrichtung 6 gespeichert, in der gemäß dem erfindungsgemäßen Verfahren die Eingangssignale verarbeitet werden. Die Berechnungseinrichtung 6 ermittelt in Abhängigkeit der ihr zugeführten Eingangssignale Stellsignale, die mittels der Datenaustauscheinrichtung 7 an die Ausgangsschaltung 8 weitergeleitetet werden. Die Ausgangsschaltung 8 leitet diese Stellsignale an nachgeordnete Stelleinrichtungen weiter, wobei im Fall eines berechneten Beschleunigungsbedarfs ein leistungsbestimmendes Stellelement 9 einer Brennkraftmaschine ansteuerbar ist. Das leistungsbestimmende Stellelement 9 der Antriebseinrichtung kann beispielsweise als elektrisch steuerbare Drosselklappe oder als elektrisch gesteuerte Kraftstoffmengenzumesseinrichtung eines Kraftstoffeinspritzsystems sein. Wird durch die Berechnungseinrichtung 6 ein Verzögerungsbedarf des eigenen Fahrzeugs ermittelt, so gibt die Ausgangsschaltung 8 Stellsignale an die Verzögerungseinrichtungen 10 des Fahrzeugs weiter. Diese werden mittels eines elektrisch steuerbaren Bremskraftverstärkers an die Fahrzeugbremsen weitergegeben, die das Fahrzeug entsprechend den Stellsignalen verzögem.

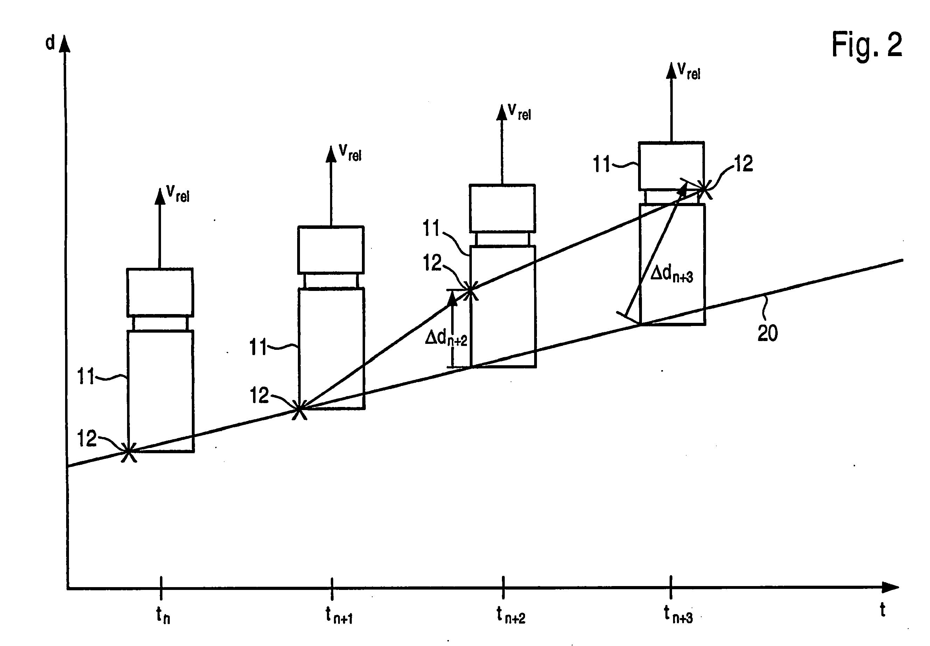

In Figur 2 ist ein Abstands-Zeit-Diagramm einer Fahrsituation dargestellt. Zu verschiedenen, aufeinanderfolgenden Zeitpunkten tₙ, tₙ₊₁, tₙ₊₂ sowie tₙ₊₃ ist ein schematisch dargestellter, vorherfahrender Lastkraflwaagen 11 eingezeichnet. Dieser Lastkraftwagen bewegt sich in einem bestimmten Abstand d, der anhand der Koordinatenachse aufgetragen ist, vor dem eigenen Fahrzeug mit der Relativgeschwindigkeit vᵣₑₗ fort. Durch die Objektdetektionssensorik 3 werden Sendesignale abgestrahlt, die im Reflexionspunkt 12, der durch ein Kreuz markiert ist, am vorherfahrenden Lastkraftwagen 11 reflektiert und von der Objektsensorik empfangen. Da im dargestellten Beispiel der Lastkraftwagen 11 eine Relativgeschwindigkeit vᵣₑₗ größer der eigenen Fahrzeuggeschwindigkeit v aufweist, bewegt sich der Lastkraftwagen 11 mit zunehmender Zeit t vom eigenen Fahrzeug weg, wobei der zunehmende Abstand d in Abhängigkeit der Zeit t in diesem Beispiel linear anwächst, wie es durch die Gerade 20 dargestellt ist. Das ausgesandte Mikrowellensignal wird beispielhaft an der linken, hinteren Ecke des Lastkraftwagens 11 im Reflexionspunkt 12 reflektiert. Zum Zeitpunkt tₙ₊₁ hat sich der Lastkraftwagen 11 aufgrund seiner Relativgeschwindigkeit vᵣₑₗ vom eigenen Fahrzeug, in dem der Sensor eingebaut ist, fortbewegt, wodurch der Abstand d größer wurde. Zu diesem Zeitpunkt wird das Sendesignal nach wie vor von der hinteren, linken Ecke des Lastkraftwagens 11 reflektiert, so dass der Reflexionspunkt im Vergleich zum Zeitpunkt tₙ unverändert blieb. Da aufgrund der gemessenen Relativgeschwindigkeit sowie der Objektposition zum Zeitpunkt tₙ der wahrscheinliche Aufenthaltszeitpunkt für den Zeitpunkt tₙ₊₁ vorausberechnet wurde kann nun zum Zeitpunkt tₙ₊₁ ein Vergleich zwischen der vorausberechneten Objektposition sowie der zum Zeitpunkt tₙ₊₁ ermittelten Objektposition durchgeführt werden. Da während diesen beiden Zeitpunkten der Reflexionspunkt 12 unverändert blieb, sind die Abweichungen sehr gering zwischen dem errechneten und dem gemessenen Aufenthallsort, so dass die Abweichung sehr gering ist. Zu einem weiteren Zeitpunkt tₙ₊₂ wandert der Reflexionspunkt beispielhaft auf dem vorherfahrenden Lastwagen 11, der als Objekt erkannt wurde. In diesem Fall ist als Reflexionspunkt 12 beispielhaft die linke Seite des Lastkraftwagens 11 eingezeichnet. Da aufgrund der Relativgeschwindigkeit vᵣₑₗ und das Abstandes d sowie des Azimutwinkels phi zum Zeitpunkt tₙ₊₁ eine Vorausberechnung des Objektaufenthaltsortes für den Zeitpunkt tₙ₊₂ vorausberechnet wurde und diese vorausberechnete Objektposition zum Zeitpunkt tₙ₊₂ mit der tatsächlich gemessenen Objektposition des Reflexionspunktes 12 verglichen wird, kann wiederum die Abweichung dieser beiden Werte voneinander ermittelt werden. Da zwischen dem Zeitpunkt tₙ₊₁ und dem Zeitpunkt tₙ₊₂ der Radarreflexionspunkt 12 um den Abstand Δdₙ₊₂ auf dem Objekt gewandert ist, weist die Abweichung zwischen der vorausberechneten und der tatsächlich ermittelten Objektposition für den Zeitpunkt tₙ₊₂ eine weitaus größere Abweichung auf, da die Reflexionswanderung um die Entfernung Δdₙ₊₂ zusätzlich hinzugekommen ist. Ausgewertet wird insbesondere die zeitliche Korrelation der Abweichung der momentan gemessenen und der vorausberechneten Objektposition. Refelxionwanderungen zeichnen sich durch einen großen, zeitlich korrelierten Fehler zwischen diesen beiden Werten aus. Dies äußert sich so, als ob den Messwerten ein niederfrquentes Signal überlagert werden würde. Ein Messrauschen ist in der Regel nicht korreliert, so dass die Reflexwanderung durch eine Korrelationsauswertung erkannt werden kann und nicht das vorhandene Messrauschen in die Objektklassifikation einfliesst. Durch die Korrelation des momentan gemessenen mit dem vorausberechneten Objektaufenthaltsort kann also der große, zeitlich korrelierte Fehler erkannt und zur Objektklassifikation herangezogen werden.

Durch die Ermittlung dieser Länge der Objektwanderung ist es weiterhin möglich, auf die Objektgröße zu schließen, da auf einem Lastkraftwagen wie in Figur 2 durch Bezugszeichen 11 dargestellt, größere Reflexionswanderungen möglich sind als auf einem Personenkraftwagen oder gar auf einem Zweirad. Aus der gemessenen Objektposition sowie der Relativgeschwindigkeit Vᵣₑₗ des Lastkraftwagens 11 zum Zeitpunkt tₙ₊₂ wird wiederum ein zukünftiger Objektaufenthaltsort für den Zeitpunkt tₙ₊₃ vorausberechnet sowie zum Zeitpunkt tₙ₊₃ ermittelt. Beispielhaft ist der Radarreflexionspunkt 12 auf dem Lastkraftwagen 11 wiederum gesprungen, wobei der Radarreflexionspunkt 12, der durch ein Kreuz gekennzeichnet ist, nunmehr an der rechten hinteren Ecke des Führerhauses des schematisch dargestellten Lastkraftwagens 11 ermittelt wurde. Durch den ermittelten und den vorausberechneten Objektaufenthaltsort ist auch zum Zeitpunkt tₙ₊₃ eine Berechnung der Abweichung zwischen vorausberechnetem und ermitteltem Objektaufenthaltsort ermittelbar, wobei zu diesem Zeitpunkt der Radarreflexionspunkt 12 auf dem Objekt 11 um den Abstand Δdₙ₊₃ im Vergleich zu den Radarreflexionspunkten zu den Zeitpunkten tₙ und tₙ₊₁ verändert ist. Bei der Ermittlung der Abweichungen zwischen den ermittelten und berechneten Objektpositionen ist es möglich, dass insbesondere auf großen Objekten die Radarreflexionspunkte größere Unschärfen aufweisen können, da Lastkraftwagen größere Flächen für Radarreflexionen bieten als Personenkraftwagen. Weiterhin ist es möglich, die Anzahl an Reflexionspunkten auszuwerten, wobei in Figur 2 pro Zeitpunkt lediglich ein Radarreflexionspunkt 12 dargestellt ist.

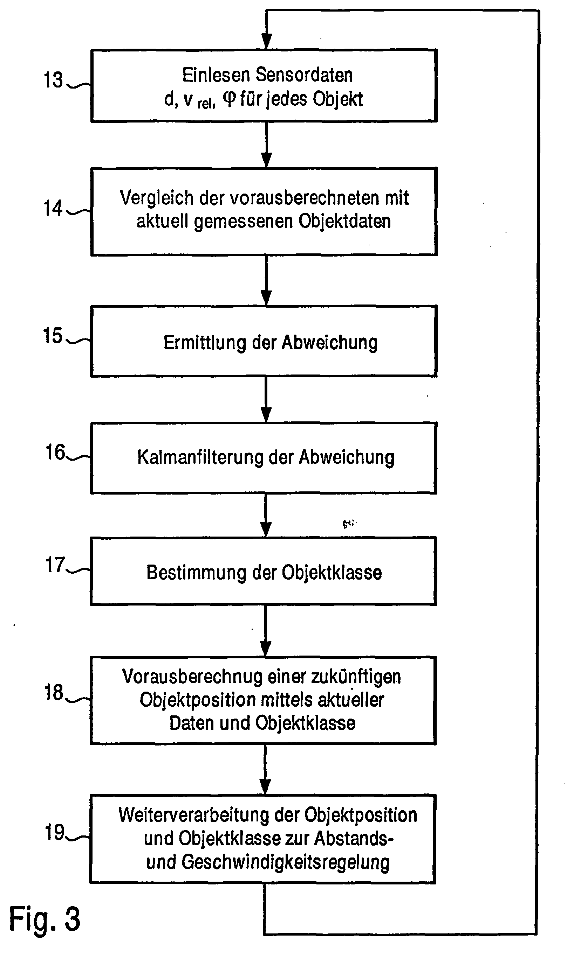

In Figur 3 ist ein schematisches Ablaufdiagramm des erfindungsgemäßen Verfahrens gezeigt. Dies beginnt in Schritt 13, zu dem die Sensordaten Abstand d zwischen dem eigenen Fahrzeug und dem detektierten Objekt, die Relativgeschwindigkeit vᵣₑₗ des detektierten Objekts bezüglich der eigenen Fahrzeuggeschwindigkeit sowie der Azimutwinkel phi, den das Objekt bezüglich der Sensorhauptachse aufweist, für jedes Objekt eingelesen werden. Diese Sensordaten werden im darauffolgenden Schritt 14 mit der aus dem vorherigen Messzyklus ermittelten Daten, die mittels eines fahrdynamischen Modells in den momentanen Messzyklus vorausberechnet wurden, verglichen. Im folgenden Schritt 15 wird die Abweichung zwischen der vorausberechneten und der aktuell gemessenen Objektposition ermittelt Gemäß einer bevorzugten Ausführungsform ist es gemäß Schritt 16 möglich, die Abweichung der Ermittlung zwischen berechneten und gemessenen Objektpositionen einer Kalmanfilterung zu unterziehen. Im darauffolgenden Schritt 17 wird aus der Größe der Abweichung sowie der Entfernung der Radarreflexionswanderungen auf dem Objekt die Objektklasse bestimmt. Hierbei werden Objekte, auf denen Radarreflexionen sehr eng beieinander liegen als Punktobjekt, beispielsweise ein Kanaldeckel oder eine Coladose identifiziert oder bei etwas größerer Ausdehnung der Abweichungen der gemessenen und vorausberechneten Radarreflexionspunkte einem Zweirad zugeordnet. Zur Objektklassifikation kann man vorteilhafterweise auch die Anzahl gleichzeitiger Refelxionspunkte auf einem Objekt auswerten, wobei auf eine umso größere Objektklasse geschlossen wird, je mehr Reflexionspunkte gleichzeitig auf einem Objekt vorhanden sind. Mit zunehmender räumlicher Verteilung der Radarreflexionspunkte auf dem Objekt kann dieses Objekt auch als Personenkraftwagen oder gar als Lastkraftwagen klassifiziert werden. Wird die räumliche Entfernung der Radarreflexionen größer als dies seit Beginn der Detektierung des Objektes der Fall war, so ist auch eine Änderung der Objektklasse möglich, so dass beispielsweise ein Personenkraftwagen nun als Lastkraftwagen detektierbar ist oder ein Zweirad als Personenkraftwagen detektiert werden kann, so dass ein Objektklassenwechsel von einer Objektklasse kleinerer räumlicher Ausdehnung hin zu einer Objektklasse größerer räumlicher Ausdehnung möglich ist. Lediglich die umgekehrte Objektklassifikation ist demnach nicht sinnvoll, da ein bereits als Lastkraftwagen erkanntes Objekt, das bereits eine große räumliche Ausdehnung der Radarreflexionswanderungen aufgewiesen hat, infolge einer aktuellen Objektpositionsmessung, die nah bei vorausgegangen Radarreflexionspunkten liegt, nicht sicher auf einen Pkw geschlossen werden kann, da dieses bereits vorher als Lastkraftwagen klassifiziert wurde und damit nicht zwingend bei jeder Messung weit auseinanderliegende Radarreflexionspunkte 12 aufweisen muss. Im darauffolgenden Schritt 18 wird aus den aktuellen Sensordaten eine zukünftige Objektposition für jedes detektierte Objekt vorausberechnet, wobei hierfür die aktuellen Sensordaten sowie eventuell. die Objektklasse herangezogen wird. Aufgrund der Objektklasse kann man Dynamikgrenzen vorgeben, so dass beispielsweise ein Zweirad in Form eines Motorrades eine große laterale Querbeschleunigung bezüglich des eigenen Fahrzeugs aufweisen kann, diese Querbeschleunigung jedoch bei einem Lastkraftwagen geringer ist. Aufgrund der ermittelten Objektklasse ist es daher möglich, das fabrdynamische Modell, mit dem aus den momentanen Objektdaten zukünftige Objektdaten für den nächsten Messzyklus berechnet werden, entsprechend anzupassen. Im folgenden Schritt 19 wird die ermittelte Objektposition sowie eventuell die Objektklasse zur Abstands- und Geschwindigkeitsregelung an die nachfolgende Regelfunktion weitergegeben, die aufgrund der ermittelten Sensordaten das eigene Fahrzeug in der Geschwindigkeit regelt.

Nach Schritt 19 beginnt das Verfahren wieder von neuem bei Schritt 13 und wird wieder von Neuem durchlaufen.

## Patentansprüche

1. Radarsensor zur Abstands- und Geschwindigkeitsregelung eines Kraftfahrzeugs, der Objekte (11) in Fahrtrichtung vor dem Fahrzeug erkennt und mindestens die Größen Abstand (d), Relativgeschwindigkeit (vᵣₑₗ) und Azimutwinkel (phi) der erkannten Objekte (11) bezüglich des Fahrzeugs ermittelt, wobei die zeitliche Veränderung (Δdₙ₊₂, Δdₙ₊₃) des Orts eines Reflexionspunkts (12) der Radarstrahlung auf dem Objekt (11) ermittelt wird und eine Klassifikation des detektierten Objekts in Abhängigkeit der zeitlichen Veränderung (Δdₙ₊₂, Δdₙ₊₃) des Orts des Reflexionspunkts (12) ermittelt wird, indem eine räumliche Ausdehnung (Δdₙ₊₂, Δdₙ₊₃) der zeitluchen Veränderung des orts des Reflexionspunkts (12) über einen vorbestimmten Zeitraum (Δt=tₙ₊₃-tₙ) erfasst wird und diese räumliche Ausdehnung (Δdₙ₊₂, Δdₙ₊₃) anhand zeitlicher Veränderungen des ermittelten Azimutwinkels (phi) des Reflexionspunktes (12) ermittelt wird, dadurch gekenntzeichnet, dass die momentane Aufenthaltsposition des erkannten Objekts (11) aus einer zuvor (tₙ₊₁) gemessenen Objektposition (d, phi) und einer zuvor (tₙ₊₁) gemessenen Relativgeschwindiskeit (vᵣₑₗ) des Objekts vorausberechnet wird und die räumliche Ausdehnung der zütlichen Veränderung (Δdₙ₊₂) des orts des Reflexionspunkts (12) aus der Abweichung anschen der momentan (tₙ₊₂) gemessenen und der für diesen zutpankt (tₙ₊₂) vorausberechneten Objektposition ermittelt wird.

2. Radarsensor nach Anspruch 1, **dadurch gekennzeichnet, dass** die Abweichung zischen der momentan (tₙ₊₂) gemessenen und der für diesen züt punkt(tₙ₊₂) vorausberechneten Objektposition miteinander korreliert werden und der sich hierbei ergebende korrelierte Fehler zur Objektklassifiikation herangezogen wird.

3. Radarsensor nach einem der vorhergehenden Ansprüche, **dadurch gekennzeichnet, dass** die Objekte im Rahmen der Objektklassifikation (17) zu einer der Objektklassen Personenkraftwagen, Lastkraftwagen, Zweirad, Kanaldeckel, Leitplanke oder sonstige Objekte zugeordnet werden.

4. Verfahren zur Abstands- und Geschwindigkeitsregelung eines Kraftfahrzeugs, bei dem Objekte (11) in. Fahrtrichtung vor dem Fahrzeug mittels eines Radarsensors (3) erkennt und mindestens die Größen Abstand (d), Relativgeschwindigkeit (vᵣₑₗ) und Azimutwinkel (phi) der erkannten Objekte (11) bezüglich des Fahrzeugs ermittelt werden, wobei die zeitliche Veränderung des Orts eines Reflexionspunkts (12) der Radarstrahlung auf dem Objekt (11) ermittelt wird und eine Klassifikation (17) des detektierten Objekts (11) in Abhängigkeit der zeitlichen Veränderung (Δdₙ₊₂, Δdₙ₊₃) des orts Reflexionspunkts (12) ermittelt wird, indem eine räumliche Ausdehnung (Δdₙ₊₂, Δdₙ₊₃) der Beitlichen Veränderung des Orts des Reflexionspunkts (12) über einen vorbestimmten Zeitraum (Δt=tₙ₊₃-tₙ) erfasst wird und diese räumliche Ausdehnung (Δdₙ₊₂, Δdₙ₊₃) anhand zeitlicher Veränderungen des ermittelten Azimutwinkels (phi) des Reflexionspunktes (12) ermittelt wird, **dadurch gekennzeichnet, dass** die momentane Aufenthaltsposition des erkannten Objekts (11) aus einer zuvor (tₙ₊₁) gemessenen Objektposition und einer zuvor (tₙ₊₁) gemessenen Relativgeschwindigkeit (vᵣₑₗ) des Objekts vorausberechnet wird und die räumliche ansdehgung der zuchen Veranderung (Δdₙ₊₂) des orts des Rexionspunkts (12) aus der Abweichung swischen der momentan (tₙ₊₂) gemessenen und der für diesen zeitpunkt (tₙ₊₂) vorausberechneten Objektposition ermittelt wird.

5. Verfahren nach Anspruch 4, **dadurch gekennzeichnet, dass** die Abweichung der momentan (tₙ₊₂) gemessenen und der für diesen zeitpunkt (tₙ₊₂) vorausoerechneten Objektposition miteinander korreliert werden und der sich hierbei ergebende korrelierte Fehler zur Objektklassifikation herangezogen wird.

6. Verfahren nach Anspruch 4 oder 5, **dadurch gekennzeichnet, dass** Objekte (11) im Rahmen der Objektklassifikation (17) zu einer der Objektklassen Personenkraftwagen, Lastkraftwagen, Zweirad, Kanaldeckel, Leitplanke oder sonstige Objekte zugeordnet werden.

7. Verfahren nach Anspruch 6, **dadurch gekennzeichnet, dass** die Abweichung zwischen der momentan (tₙ₊₂) gemessenga und der wir decon für diesen zeitpunkt (tₙ₊₂) vorausberechneten Objektposition kalmangefiltert (16) wird.

8. Verfahren nach Anspruch 7, **dadurch gekennzeichnet, dass** die kalmangefilterte Abweichung und/oder die ermittelte Objektklasse zur genaueren Vorausberechnung der zukünftigen Aufenthaltsposition des erkannten Objekts (11) aus der momentan gemenenen Objektposition und der momentan gemesonen Relativgeschwindigkeit des Objekts (11) herangezogen wird.

## Claims

1. Radar sensor for performing adaptive cruise control of a motor vehicle, which detects objects (11) in front of the vehicle in the direction of travel and determines the variables of the distance (d), relative speed (vᵣₑₗ) and azimuth angle (phi) of the detected objects (11) with respect to the vehicle, wherein the change (Δdₙ₊₂, Δdₙ₊₃) of the location of a reflection point (12) of the radar radiation on the object (11) over time is determined and a classification of the detected object is determined as a function of the change (Δdₙ₊₂, Δdₙ₊₃) of the location of the reflection point (12) over time by virtue of the fact that a spatial extent (Δdₙ₊₂, Δdₙ₊₃) of the change of the location of the reflection point (12) over time is detected over a predetermined time period (Δt=tₙ₊₃-tₙ) and this spatial extent (Δdₙ₊₂, Δdₙ₊₃) is determined on the basis of changes in the determined azimuth angle (phi) of the reflection point (12) over time, **characterized in that** the instantaneous position of the detected object (11) is calculated in advance on the basis of a previously measured (tₙ₊₁) object position (d, phi) and a previously measured (tₙ₊₂) relative speed (vᵣₑₗ) of the object, and the spatial extent of the change (Δdₙ₊₂) of the location of the reflection point (12) over time is determined from the deviation between the instantaneously measured (tₙ₊₂) object position and the object position which is calculated in advance for this time (tₙ₊₂).

2. Radar sensor according to Claim 1, **characterized in that** the deviation between the instantaneously measured (tₙ₊₂) object position and the object position which is calculated in advance for this time (tₙ₊₂) are correlated with one another and the resulting correlated error is used for the object classification.

3. Radar sensor according to one of the preceding claims, **characterized in that** within the scope of the object classification (17), the objects are assigned to one of the object classes of passenger car, lorry, two-wheeled vehicle, manhole cover, crash barrier or other objects.

4. Method for performing adaptive cruise control of a motor vehicle, in which objects (11) in front of the vehicle in the direction of travel are detected by means of a radar sensor (3) and at least the variables of distance (d), relative speed (vᵣₑₗ) and azimuth angle (phi) of the detected objects (11) with respect to the vehicle are detected, wherein the change of the location of a reflection point (12) of the radar radiation on the object (11) over time is detected and a classification (17) of the detected object (11) is determined as a function of the change (Δdₙ₊₂, Δdₙ₊₃) of the location of the reflection point (12) over time is determined by virtue of the fact that a spatial extent (Δdₙ₊₂, Δdₙ₊₃) of the change of the location of the reflection point (12) over time is detected over a predetermined time period (Δt=tₙ₊₃-tₙ) and this spatial extent (Δdₙ₊₂, Δdₙ₊₃) is determined on the basis of changes in the determined azimuth angle (phi) of the reflection point (12) over time, **characterized in that** the instantaneous position of the detected object (11) is calculated in advance on the basis of a previously measured (tₙ₊₁) object position and a previously measured (tₙ₊₁) relative speed (vᵣₑₗ) of the object, and the spatial extent of the change (Δdₙ₊₂) of the location of the reflection point (12) over time is determined from the deviation between the instantaneously measured (tₙ₊₂) object position and the object position which is calculated in advance for this time (tₙ₊₂).

5. Method according to Claim 4, **characterized in that** the deviation of the instantaneously measured (tₙ₊₂) object position from the object position calculated in advance for this time (tₙ₊₂) are correlated with one another and the resulting correlated error is used for object classification.

6. Method according to Claim 4 or 5, **characterized in** within the scope of the object classification (17), objects (11) are assigned to one of the object classes of passenger car, lorry, two-wheeled vehicle, manhole cover, crash barrier or other objects.

7. Method according to Claim 6, **characterized in that** the deviation between the instantaneously measured (tₙ₊₂) object position and the object position which is calculated in advance for this time (tₙ₊₂) is Kalman-filtered (16).

8. Method according to Claim 7, **characterized in that** the Kalman-filtered deviation and/or the determined object class are/is used for more precise calculation in advance of the future position of the detected object (11) from the instantaneously measured object position and the instantaneously measured relative speed of the object (11).

## Revendications

1. Capteur radar pour la régulation de la distance et de la vitesse d'un véhicule automobile, lequel détecte des objets (11) dans le sens de déplacement à l'avant du véhicule et détermine au moins les grandeurs Distance (d), Vitesse relative (vᵣₑₗ) et Angle d'azimut (phi) des objets (11) détectés par rapport au véhicule, la variation dans le temps (Δ_{dn+2}, Δ_{dn+3}) de l'endroit d'un point de réflexion (12) du rayonnement radar sur l'objet (11) étant déterminée et une classification de l'objet détecté en fonction de la variation dans le temps (Δ_{dn+2}, Δ_{dn+3}) de l'endroit du point de réflexion (12) étant déterminée en détectant une expansion dans l'espace (Δ_{dn+2}, Δ_{dn+3}) de la variation dans le temps de l'endroit du point de réflexion (12) sur une période prédéfinie (Δt = tₙ₊₃ - tₙ) et en déterminant cette expansion dans l'espace (Δ_{dn+2}, Δ_{dn+3}) au moyen des variations dans le temps de l'angle d'azimut (phi) déterminé du point de réflexion (12), **caractérisé en ce que** la position de séjour momentanée de l'objet (11) détecté est calculée à l'avance à partir d'une position de l'objet (d, phi) mesurée précédemment (tₙ₊₁) et une vitesse relative (vᵣₑₗ) de l'objet mesurée précédemment (tₙ₊₁) et l'expansion dans l'espace (Δ_{dn+2}) de la variation dans le temps de l'endroit du point de réflexion (12) est déterminée à partir de l'écart entre la position de l'objet momentanée mesurée à l'instant (tₙ₊₁) et celle calculée à l'avance pour ce moment (tₙ₊₁).

2. Capteur radar selon la revendication 1, **caractérisé en ce que** les écarts entre la position de l'objet momentanée mesurée (tₙ₊₁) et celle calculée à l'avance pour ce moment (tₙ₊₁) sont corrélés entre eux et l'erreur corrélée ainsi obtenue est utilisée pour la classification de l'objet.

3. Capteur radar selon l'une des revendications précédentes, **caractérisé en ce que** les objets, dans le cadre de la classification d'objet (17), sont associés à l'une des classes d'objet Véhicule de tourisme, Poids-lourd, Deux-roues, Plaque d'égout, Glissière de sécurité ou Autres objets.

4. Procédé de régulation de la distance et de la vitesse d'un véhicule automobile, avec lequel des objets (11) dans le sens de déplacement à l'avant du véhicule sont détectés au moyen d'un capteur radar (3) et au moins les grandeurs Distance (d), Vitesse relative (vᵣₑₗ) et Angle d'azimut (phi) des objets (11) détectés par rapport au véhicule sont déterminées, la variation dans le temps de l'endroit d'un point de réflexion (12) du rayonnement radar sur l'objet (11) étant déterminée et une classification (17) de l'objet (11) détecté en fonction de la variation dans le temps (Δ_{dn+2}, Δ_{dn+3}) de l'endroit du point de réflexion (12) étant déterminée en détectant une expansion dans l'espace (A_{dn+2}, Δ_{dn+3}) de la variation dans le temps de l'endroit du point de réflexion (12) sur une période prédéfinie (Δt = tₙ₊₃ - tₙ) et en déterminant cette expansion dans l'espace (Δ_{dn+2}, Δ_{dn+3}) au moyen des variations dans le temps de l'angle d'azimut (phi) déterminé du point de réflexion (12), **caractérisé en ce que** la position de séjour momentanée de l'objet (11) détecté est calculée à l'avance à partir d'une position de l'objet mesurée précédemment (tₙ₊₁) et une vitesse relative (vᵣₑₗ) de l'objet mesurée précédemment (tₙ₊₁) et l'expansion dans l'espace (Δ_{dn+2}) de la variation dans le temps de l'endroit du point de réflexion (12) est déterminée à partir de l'écart entre la position de l'objet momentanée mesurée (tₙ₊₁) et celle calculée à l'avance pour ce moment (tₙ₊₁).

5. Procédé selon la revendication 4, **caractérisé en ce que** les écarts entre la position de l'objet momentanée mesurée (tₙ₊₁) et celle calculée à l'avance pour ce moment (tₙ₊₁) sont corrélés entre eux et l'erreur corrélée ainsi obtenue est utilisée pour la classification de l'objet.

6. Procédé selon la revendication 4 ou 5, **caractérisé en ce que** les objets (11), dans le cadre de la classification d'objet (17), sont associés à l'une des classes d'objet Véhicule de tourisme, Poids-lourd, Deux-roues, Plaque d'égout, Glissière de sécurité ou Autres objets.

7. Procédé selon la revendication 6, **caractérisé en ce que** l'écart entre la position de l'objet momentanée mesurée (tₙ₊₁) et celle calculée à l'avance pour ce moment (tₙ₊₁) est soumis à un filtrage de Kalman (16).

8. Procédé selon la revendication 7, **caractérisé en ce que** l'écart soumis à un filtrage de Kalman et/ou la classe d'objet déterminée est utilisé pour un calcul à l'avance plus précis de la future position de séjour de l'objet (11) détecté à partir de la position de l'objet momentanément mesurée à l'instant et de la vitesse relative de l'objet (11) momentanément mesurée à l'instant.
